# EUROPÄISCHE PATENTSCHRIFT

(11) **EP 0 867 047 B1**
(45) Veröffentlichungstag und Bekanntmachung des Hinweises auf die Patenterteilung: **20.09.2000**
(21) Anmeldenummer: 96946060.9
(22) Anmeldetag: 06.12.1996
(51) Int. Cl.: H01M 8/02

(54) **OXIDATIONSBESTÄNDIGE, CHROMOXIDBILDENDE LEGIERUNG**
OXIDATION-RESISTANT, CHROMIUM-OXIDE-FORMING ALLOY
ALLIAGE ANTI-OXYDATION FORMATEUR D'OXYDE DE CHROME

(30) Priorität: 13.12.1995 DE 19546614
(43) Veröffentlichungstag der Anmeldung: 30.09.1998
(73) Patentinhaber: FORSCHUNGSZENTRUM JÜLICH GMBH, 52425 Jülich (DE)
(72) Erfinder: QUADAKKERS, Willem, J., NL-6363 BN Wijnandsrade (NL)
(86) Internationale Anmeldenummer: DE9602364
(87) Internationale Veröffentlichungsnummer: WO9722156

(56) Entgegenhaltungen:
- EP-A- 0 338 823
- EP-A- 0 424 732
- WO-A-96/28855
- DE-C- 4 410 711

## Beschreibung

Die Erfindung bezieht sich auf Chrombasislegierungen auf der Basis von Chrom. Chromoxidbildende Legierungen auf der Basis NiCr, FeCr, FeNiCr, CoCr oder Cr werden in vielen Bereichen der Technik (Turbinen- und Triebwerksbau, Chemie, Ofenbau, Energieumwandlungsanlagen wie Brennstoffzellen, Müllverbrennung, etc. ) als Konstruktionswerkstoffe für Hochtemperaturkomponenten eingesetzt. Die Korrosionsbeständigkeit bei hohen Betriebstemperaturen (z.B. bei 500 - 1100°C) beruht auf Cr₂O₃-Deckschichten, die sich bei Betriebstemperatur durch selektive Oxidation des Legierungselementes Cr (typische Konzentration in den betreffenden Legierungen > 15%) an der Komponentenoberfläche bilden.
Chromoxidbildende Legierungen sind bei hohen Temperaturen nur bedingt einsetzbar. Z. B. ist aus DE-C-44 10 711 bekannt, daß bei bipolaren Platten in Hochtemperatur-Brennstoffzellen die sich bildenden Chromoxid-Deckschichten abplatzen und so die Lebensdauer und Funktionsweise der Komponente begrenzt wird.
Die Druckschrift WO-A-96/28855, veröffentlicht am 19.09.1996 und mit Prioritätsanspruch vom 15.03.1995, sowie die Druckschrift EP -A-0 815 607 offenbaren plattenförmige Substrate aus chromoxidbildenden Legierungen. Die plattenförmigen Substrate werden unter anderem als Interkonnektoren in Brennstoffzellen bei Betriebstemperaturen oberhalb von 500 °C verwendet. Die Legierung enthält die Elemente Mn, Fe, Co und/ oder Ni. Die Elemente bilden in der Oberfläche der Legierung durch thermisch geförderte Diffusion neben der Cr₂O₃-Deckschicht eine Spinellzwischenschicht mit abnehmendem Chromgehalt bei zunehmendem Abstand zum Substrat. CrO₃-Abdampfungen sollen so während des Betriebes vermieden werden.

Aufgabe der Erfindung ist die Schaffung einer chromoxidbildenden Legierung, die unter Hochtemperatur-Bedingungen eine gute Lebensdauer und Funktionsweise aufweist. Ferner ist Aufgabe der Erfindung die Angabe einer vorteilhaften Verwendung der chromoxidbildenden Legierung.

Gelöst werden die Aufgaben durch eine Legierung mit den Merkmalen von Anspruch 1 sowie eine Verwendung mit den Merkmalen vonm Anspruch 3. Eine vorteilhafte Ausgestaltung ergibt sich aus dem Unteranspruch 2.
Die Lebensdauer der Legierung wird erstens durch in geringen Mengen (z.B. 0.1 - 1 Mass.-%) zugesetzte reaktive Elemente zur Legierung gesteigert.
Zweitens sind reaktive, in der Oberfläche der Legierung implantierte vorgesehen. Unter reaktiven Elementen sind chemische Elemente wie z. B. Y, Ce, Hf, La zu verstehen, die eine höhere Affinität zum Sauerstoff im Vergleich zu Chrom aufweisen. Diese verlangsamen oder stoppen den Transport von Sauerstoff- und Metallionen durch Cr₂O₃. Aufgrund der anspruchsgemäßen Implantation in der Oberfläche ist folglich die Konzentration der reaktiven Elemente auf bzw. in der Oberfläche einer hergestellten Legierung größer im Vergleich zur Konzentration der reaktiven Elemente innerhalb der Legierung.

Bilden sich Cr₂O₃-Deckschichten auf der Legierung, so diffundieren die reaktiven Elemente in die Deckschichten hinein. Infolge des Diffusionsprozesses werden die reaktiven Elemente in die Oxidkorngrenzen eingebaut und blockieren dann die Transportwege für Metall- und Sauerstoffionen. Die weitere Bildung von Cr₂O₃ wird hierdurch verlangsamt. Das verlangsamte Wachstum führt wiederum zu einer verbesserten Haftung der Cr₂O₃-Deckschicht auf der Legierung. Aufgrund dieser zwei Wirkungen wird insbesondere bei einem Einsatz unter hohen Temperaturen die Funktionsweise der Legierung bzw. eine aus dieser Legierung hergestellte bipolare Platte wesentlich verbessert sowie ihre Lebensdauer erheblich erhöht.

Die Diffusionsgeschwindigkeit reaktiver Elemente von der Legierung in die sich bildende Oxidschicht beeinflußt die gewünschte Wirkung: Je schneller reaktive Elemente in sich bildende Cr₂O₃-Deckschichten hineindiffundieren, desto eher wird das Wachstum dieser Deckschichten vorteilhaft verlangsamt. Eine verbesserte Ausgestaltung der Erfindung liegt daher vor, wenn Mittel vorgesehen sind, die die Diffusion der reaktiven Elemente in die sich bildende Cr₂O₃-Schicht fördern. Reaktive Elemente diffundieren dann schnell in sich bildende Cr₂O₃-Deckschichten.

Die Diffusionsgeschwindigkeit ist z. B. vergleichsweise gering, wenn die Legierungsmatrix nur eine geringe Löslichkeit für das reaktive Element aufweist. Z. B. ist Yttrium oder Yttriumoxid in einer Cr-Basislegierung nur gering löslich im Sinne der Erfindung. Vorteilhaft sind daher Legierung und reaktives Element so zu wählen, daß die Löslichkeit groß ist. Beispielsweise ist die Löslichkeit von Y in Ni-20-Cr-Y₂O₃ erheblich höher als in einer Cr-Basislegierung mit Yttriumoxid.

Im Fall von Yttrium oder Yttriumoxid in einer Cr-Basislegierung ist beispielsweise ferner das reaktive Element in der Legierung in einer thermodynamisch stabilen Phase gebunden (z.B. Y in Form von Y-Oxid). Die thermodynamisch stabilen Phase erschwert weiter nachteilhaft die Diffusion des reaktiven Elementes in die Chromoxid-Deckschicht. Vorteilhaft sind die Kombinationen so auszuwählen, daß eine thermodynamisch instabile Phase vorliegt. Ni9Y ist eine geeignet weniger stabile Phase in einer Ni-20Cr-Y₂O₃-Legierung.

Bei ODS-Legierungen (d. h. Legierungen mit reaktiven Element-Oxid-Dispersionen, insbesondere Y₂O₃) auf NiCr-und insbesondere Cr-Basis treten geringe Diffusionsgeschwindigkeiten auf. Hohe Wachstumsraten der Chromoxid-Deckschichten treten daher z.B. bei 1000°C etwa 20 h lang auf. Bei tieferen Temperaturen kann diese Zeit hoher Wachstumsraten noch wesentlich länger sein. Erst nach 20 Stunden und mehr ist der Diffusionsprozeß soweit fortgeschritten, daß die erwünschten sehr geringen Wachstumsraten eintreten.

Um die Zeit bis zum Eintreten geringer Wachstumsraten zu verkürzen, sind in einer weiteren Ausgestaltung der Erfindung vorteilhaft in bzw. an der Legierungsoberfläche vor Oxidation bzw. vor Betriebseinsatz reaktive Elemente oder deren Oxide in sehr hohen Konzentrationen vorgesehen. Die hohe Konzentration stellt ein Mittel zur Förderung der Diffusion dar. Insbesondere Konzentrationen gemäß den Ausführungsbeispielen haben sich als erfolgreich herausgestellt.

Die reaktiven Elemente sind insbesondere als sehr dünne Schicht zu implantieren oder auf die Legierungsoberfläche aufzubringen, da es lediglich auf das Konzentrationsgefälle ankommt, um die anspruchsgemäße Förderung der Diffusion zu bewirken. Insbesondere Schichtdicken gemäß den Ausführungsbeispielen haben sich als erfolgreich herausgestellt.

### Ausführungsbeispiel 1:

Die Oberfläche einer metallischen Legierung wurde mit Ionen eines reaktiven Elementes implantiert. Die Implantationsdosis von reaktiven Elemente lag zwischen 5.10¹⁵ und 5.10¹⁷ Ionen/cm². Als vorteilhaft hat sich eine Dosis zwischen 1.10¹⁶ und 1.10¹⁷ Ionen/cm² herausgestellt. Die maximale Konzentration reaktiver Elemente betrug in der implantierten Zone 30 at.-%. Vorteilhaft waren Konzentrationen von 5-10 at. %.

Die Tiefe der implantierten Zone lag bei maximal 500 nm. Vorteilhaft lagen sie bei 10 - 500 Angström.

### Ausführungsbeispiel 2:

Zur Herstellung einer Legierung wurde diese in oxidierender Atmosphäre (z.B. Luft) bei einer Temperatur zwischen 300 und 800°C, bevorzugt jedoch zwischen 400 und 600°C, für maximal zwei Stunden, bevorzugt für 5 - 20 Minuten vorgewärmt. Anschließend wurde die heiße Legierungsprobe in eine gesättigte wäßrige Lösung eines Nitrates des gewünschten reaktiven Elements getaucht. Nach Entfernen der Legierung aus der Lösung wurde die Probe erneut bei gleichen oder ähnlichen Bedingungen wie beim ersten Erwärmungsschritt erwärmt. Abhängig von der verwendeten Nitratlösung, den Erwärmungstemperaturen und -zeiten entstand durch diese dreistufige Behandlung an der Legierungs- bzw. Komponentenoberfläche eine sehr dünne Schicht (1 - 200 nm) bestehend aus dem Oxid des reaktiven Elements.

Es hat sich gezeigt, daß bei Legierungen, die bereits reaktive Elemente in metallischer Form und insbesondere in Form einer Oxiddispersion aufwiesen, die Wachstumsrate der Cr-Oxid-Deckschicht in den Anfangsstadien hoch ist. Dies galt insbesondere für Legierungen, die nur eine geringe Löslichkeit für das reaktive Element aufweisen. Erst nach längere Zeiten nahm die Wachstumsrate stark ab.

Hergestellt und untersucht wurden Legierungen auf NiCr-, FeCr- und Cr-Basis gemäß Ausführungsbeispielen 1 oder 2 und zwar solche, die bereits zugesetzte reaktive Elemente (insbesondere Y) beinhalteten sowie Legierungen ohne derartige Zusätze. Die entsprechend den Ausführungsbeispielen 1 oder 2 in einer sehr dünnen Schicht an bzw. in die Oberfläche eingebrachten reaktiven Elemente (insbesondere Y) oder deren Oxide wurden bei Einsatz der Legierung unter oxidierenden Bedingungen und hohen Temperaturen in die Cr-Oxidschicht eingebaut.

Wurden Oberflächen von Legierungen, die keine Zusätze von reaktiven Elementen und/oder deren Oxide enthielten nach Ausführungsbeispiel 1 oder 2 modifiziert, so wurden in den Anfangsstadien der Oxidation niedrige Wachstumsraten der Cr₂O₃-Deckschichten beobachtet. Diese günstige Wirkung ging jedoch bereits nach wenigen Stunden (10 bis 100 Stunden je nach herrschender Temperatur) verloren.

Wurde eine Legierung (oder eine Komponente aus einer derartigen Legierung), die Zusätze von reaktiven Elementen und/oder deren Oxiden enthielt vor Oxidation bzw. Betriebseinsatz entsprechend Ausführungsbeispiel 1 oder 2 behandelt, so trat sofort, d. h. auch in den Anfangsstadien der Oxidation, geringe Oxidschichtwachstumsraten auf. Die geringen Wachstumsraten und die gute Schichthaftung blieben auch nach langen Zeiten erhalten.

## Patentansprüche

1. Chromoxidbildende Chrombasislegierung mit der Legierung zugesetzten Elementen, die eine höhere Affinität zum Sauerstoff im Vergleich zu Chrom aufweisen, wobei die Elemente in der Oberfläche der Legierung durch Ionenimplantation angereichert sind, so daß eine bis zu 500 nm dicke Implantationszone an der Oberfläche der Chrombasislegierung vorliegt.

2. Chrombasislegierung mit Y, Ce, Hf, La als Elemente, die eine höhere Affinität zum Sauerstoff im Vergleich zu Chrom aufweisen.

3. Verwendung einer Chrombasislegierung mit den Merkmalen nach Anspruch 1 oder 2 als Konstruktionswerkstoff für Gegenstände, die bei Temperaturen oberhalb von 500 °C eingesetzt werden.

## Claims

1. Chromium-oxide forming chromium based alloy with elements added to the alloy which have a higher affinity to oxygen as compared to chromium, and the elements are enriched in the surface of the alloy by ion implantation so that they offer an implantation zone of up to 500 nm thickness on the surface of the chromium based alloy.

2. Chromium based alloy with Y, Ce, Hf, La as elements which have a higher affinity to oxygen as compared to chromium.

3. Use of a chromium based alloy with the features of Claim 1 or 2 as construction material for objects which are applied at temperatures above 500°C.

## Revendications

1. Alliage à base de chrome formateur d'oxyde de chrome avec des éléments ajoutés à l'alliage, qui présentent une affinité plus élevée pour l'oxygène par rapport au chrome, dans lequel les éléments à la surface de l'alliage sont enrichis par implantation ionique de telle sorte que l'on obtienne une zone d'implantation d'une épaisseur allant jusqu'à 500 nm à la surface de l'alliage à base de chrome.

2. Alliage à base de chrome avec Y, Ce, Hf et La comme éléments, qui présentent une affinité supérieure par rapport à l'oxygène en comparaison du chrome.

3. Utilisation d'un alliage à base de chrome ayant les caractéristiques selon la revendication 1 ou 2 comme matériau de construction d'objets, qui sont utilisés à des températures supérieures à 500°C.
